# EUROPÄISCHE PATENTANMELDUNG

(11) **EP 0 903 573 A2**
(43) Veröffentlichungstag der Anmeldung: **24.03.1999**
(21) Anmeldenummer: 98116154.0
(22) Anmeldetag: 27.08.1998
(51) Int. Cl.: G01N 21/77

(54) **Optode zur Bestimmung von Gasen**

(30) Priorität: 19.09.1997 DE 19741335
(71) Anmelder: ROBERT BOSCH GMBH, 70442 Stuttgart (DE)
(72) Erfinder: Adolph, Dietrich, 73095 Albershausen (DE); Pfefferseder, Anton, 82054 Sauerlach-Arget (DE); Hensel, Andreas, 71665 Vaihingen (DE)

(57) **Zusammenfassung**

Es wird eine gassensitive Sensormembran zur Bestimmung von Gaskonzentrationen in Gasgemischen vorgeschlagen. Weiterhin ein Verfahren und eine Vorrichtung zur Bestimmung dieser Gaskonzentrationen, basierend auf der Änderung der Absorptionseigenschaften für elektromagnetische Strahlung und/oder des optischen Brechungsindex einer in der Sensormembran enthaltenen Indikatorsubstanz, die mit dem zu bestimmenden Gas wechselwirkt.

## Beschreibung

Die vorliegende Erfindung betrifft eine Sensormembran einer Optode nach der Gattung des Anspruches 1, ein Verfahren zur Bestimmung von Gasen in Gasmischungen nach dem Anspruch 15 und eine Vorrichtung zur Bestimmung von Gasen in Gasgemischen gemäß dem Anspruch 24.

### Stand der Technik

Der zunehmende Bedarf am direkten, zuverlässigen und schnellen Bestimmen von Gaskonzentrationen in Gasgemischen, beispielsweise in der Medizin, Umwelttechnik, der Rauch- und Feuererfassung, bei der Überwachung chemischer Prozesse oder auch für Abgasmessungen von Verbrennungsmotoren führt zu einem steigenden Interesse an der Entwicklung neuartiger Gassensoren. Bislang ist es beispielsweise nur mit hohen Kosten und relativ unzuverlässig möglich, elektrochemische Sensoren, die auf Mischoxidmaterialien basieren, zur Steuerung von Klimasystemen in Automobilen einzusetzen (A. Zeppenfeld et al., Sensor 97 Kongressband 1 S. 113 ff.). Bekannt ist beispielsweise auch die Messung des Sauerstoffpartialdruckes in Abgasen von Verbrennungsmaschinen mittels sogenannter Lambdasonden, die ebenfalls auf Keramikmaterialien basieren. Einen Überblick über Verfahren mittels Festelektrolyten Gase zu bestimmen, liefert der Artikel von I. Lundström, Sensors and Actuators B 1996, 35-36, S. 11 bis 19, wo insbesondere auch auf Fertigungs-, Miniaturisierungs- und Querempfindlichkeitsprobleme eingegangen wird. Ein Versuch, insbesondere Querempfindlichkeiten bei der Gasbestimmung zu vermeiden, ist in dem Artikel von E. Hermanns in: Sensors and Actuators 1984, 5, S.181 bis 186 beschrieben. Dabei werden Gase über die Änderung der elektrischen Leitfähigkeit von Polymeren durch Gasabsorption bestimmt. Die Änderung der Schichtdicke von Polymerschichten, die Gase absorbieren können, wird mittels Interferenz-Reflektion gemessen (EP 0 736768 A2). Aus der US-PS 5,030,420 ist eine Vorrichtung zur Bestimmung von Sauerstoff in gasförmigen Gemischen mittels eines optischen Sensors, auch als Optode bezeichnet,bekannt, bei der die Lumineszenzlöschung von Ruthenium(II)-Komplexen gemessen wird. Ein weiterer Zugang zur Bestimmung, insbesondere zur optischen Messung von chemischen Verbindungen und Ionen, bieten sogenannte Ionophore. Dies sind lipophile Liganden, welche die Fähigkeit haben, gewisse Zonen selektiv zu komplexieren und diese mittels eines Carrier-Mechanismus durch Membranen zu transportieren (EP 0 578630 B1), so daß selektiv verschiedene Ionen in Lösungen bestimmt und colorimetrisch detektiert werden können. Unter diesen Ionophoren haben die elektroneutralen ionenaktiven Substanzen ein besonders breites Anwendungsgebiet als Komponenten in ionenselektiven Flüssigmembranelektroden gefunden; z. B. als Polymerflüssigmembranelektroden in der klinischen Analytik, als Mikroelektroden in der Elektrophysiologie und beim hochselektiven Ionentransport durch künstliche Membranen. Neuerdings werden diese auch in Optodenmembranen zur reversiblen optischen Detektion von geladenen und elektrisch neutralen Spezies in Lösung verwendet (U. E. Spichiger et al., Proceedings SPIE-Int. Soc. Opt. Eng. 1991, 1510, 118). Ausgeprägte Selektivitäten ergaben sich insbesondere für die direkte Bestimmung von H⁺, Li⁺, Na⁺, K⁺, Cs⁺, Mg²⁺, Ca²⁺, Sr²⁺, Ba²⁺, Tl⁺, UO₂²⁺, Cl⁻ und CO₃²⁻. Zwei mögliche Prinzipien wurden dabei eingesetzt: Zum einen wird nur ein ionenselektiver chromophorer oder chromogener Ligand eingesetzt, der bei Kontakt mit der zu detektierenden Spezies insbesondere seine Farbe ändert. Zum anderen ermöglicht die Kombination von elektroneutralen Ionencarriern mit sogenannten Cromoionophoren in sehr dünnen Polymer-Flüssigmembranen die optische Aktivitätsbestimmung dieser Kationen und Anionen. Beide Prinzipien sind nur in pH-gepufferten Lösungen anwendbar. Alle diese vorgeschlagenen Lösungen erlaubten jedoch nicht, eine einfache und schnelle genaue Bestimmung von gasförmigen Spezies in Gasgemischen zuverlässig und ohne großen apparativen Aufwand sowie unter Vermeidung von Querempfindlichkeiten zu verwirklichen.

### Vorteile der Erfindung

Durch den Einsatz einer Sensormembran einer Optode zur Bestimmung eines physikalischen und/oder chemischen Parameters einer Probe, die ihre Absorptionseigenschaften aufgrund einer in ihr enthaltenen Indikatorsubstanz durch einen zumindest indirekten Kontakt mit einem Gas und/oder Gasgemisch ändert, ist es in einfachster Weise möglich, miniaturisierte Gassensoren, sogenannte Optoden, mittels dieser Sensormembran herzustellen. Da nur geringste Substanzmengen zur Detektion benötigt werden ist eine Miniaturisierung besonders einfach. Dadurch wird auch der Kostenfaktor entscheidend herabgesetzt.

Indem bei dem Verfahren zur Bestimmung von Gasen und Gasgemischen, die Absorptionseigenschaften der zumindest indirekt der Gasmischung ausgesetzten Indikatorsubstanz gemessen werden, ist es möglich, in einfachster Weise mittels einfacher optischer Vorrichtungen, Gase in Konzentrationen von einigen ppb bis zu einigen % ohne Querempfindlichkeiten zu bestimmen. Dies war mit den bisherigen Meßmethoden schwierig zu realisieren und erforderte zudem einen weitaus größeren apparativen Aufwand. Als Indikatorsubstanz kann beispielsweise ein chromogener Ligand eingesetzt werden, der bei physikalischer und/oder chemischer Wechselwirkung mit der zu bestimmenden Gasspezies sein Absorptionsspektrum für elektromagnetische Strahlung ändert. Ebenso ist es auch möglich, einen selektiven Liganden in Verbindung mit einem Chromoionophor zu verwenden.

Die Nachweisgrenze kann durch die Variation von Schichtdicke und Schichtzusammensetzung, insbesondere der Konzentration und der Mengen der verwendeten Verbindungen, besonders vorteilhaft und einfach bedarfsgerecht eingestellt werden, da diese miteinander korreliert sind.

In einer vorteilhaften Vorrichtung zur Bestimmung von Gasen in Gasgemischen, in denen eine gasdurchlässige Membran vorgesehen ist, die bei einem zumindest indirekten Kontakt mit einem Gas und/oder Gasgemisch ihre optischen Absorptionseigenschaften ändert, ist mindestens eine Quelle für elektromagnetische Strahlung, insbesondere eine LED, mit einer diskreten, wählbaren Wellenlänge vorgesehen. Hiermit kann auf eine aufwendige und nicht miniaturisierbare Apparatur, beispielsweise eine UV/VIS oder IR Apparatur, verzichtet werden. Damit kann die Sensormembran mit der darin enthaltenen Indikatorsubstanz mit einer diskreten wahlbaren Wellenlänge, die für jedes Gas durch vorherige Eichungsmessung bestimmt werden kann, bestrahlt werden, so daß beim Vorliegen einer Absorption, eine Transmission gemessen werden kann. Es ist darüberhinaus in einfachster Weise ebenfalls möglich, mehrere Quellen für elektromagnetische Strahlung mit mehreren Sensormembranen, die für verschiedene Gase empfindlich sind zu kombinieren, so daß mittels einer einzigen Vorrichtung mehrere Gase gleichzeitig gemessen werden können. Ebenso kann eine Quelle für elektromagnetische Strahlung mit mehreren diskreten oder integrierten Detektoren verwendet werden. Es ist ebenfalls möglich, eine Quelle elektromagnetischer Strahlung, die den gesamten Spektralbereich abdeckt in Verbindung mit Wellenlängenselektoren zu verwenden.

Weitere vorteilhafte Ausgestaltungen und Weiterbildungen der Erfindung sind in den Unteransprüchen beschrieben.

In einer besonders vorteilhaften Weiterbildung der erfindungsgemäßen Sensormembran enthält diese eine Indikatorsubstanz, die gasspezifisch wirksam ist. Damit wird in einfachster Weise verhindert, daß Querempfindlichkeiten, wie es insbesondere bei Sensoren auf Metalloxid- und Mischoxidbasis vorkommt ausgeschaltet werden. Je nach Indikatorsubstanz kann so jede flüchtige Verbindung und jedes gewünschte Gas gemessen werden, beispielsweise Wasserstoff, Sauerstoff, Wasserdampf, Kohlenmonoxid, flüchtige Amine usw., ohne daß die Verbindungen ihren Nachweis wechselseitig blockieren oder verfälschen.

In einer weiteren vorteilhaften Ausgestaltung liegt die Indikatorsubstanz als Ionenpaar vor, wobei das Ionenpaar aus einem kationischen oder anionischen Farbstoffmolekül, beispielsweise einem Phenolphthalein- oder Eosin-, oder Fluoresceinderivat und zumindest einem die elektrische Ladung des Farbstoffmoleküls kompensierenden Gegenion besteht. Das hier verwendete Prinzip eines Ionenpaares kann es ermöglichen, das Gas in das korrespondierende Ion zu überführen, welche geladen ist, und demzufolge eine Gegenladung erforderlich macht, so daß diese Ladung des nunmehr als Ion vorliegenden Gases durch eines der beiden Teile des Ionenpaares kompensiert werden kann.

Insbesondere ist es vorteilhaft, wenn die Indikatorsubstanz eine Verbindung, beispielsweise einen selektiven Liganden oder einen Metallkomplex, enthält, die mit dem zu bestimmenden Gas chemisch und/oder physikalisch reversibel wechselwirkt. Durch die chemische und/oder physikalische Wechselwirkung ist es möglich, insbesondere wenn diese reversibel erfolgt, die Empfindlichkeit der Sensormembran für das zu messende Gas über viele Meßzyklen hinweg unverändert beizubehalten, was sich vorteilhaft auf die Lebensdauer auswirkt. Beispiele hierfür sind Azobenzole, fluorierte Acetophenone, offenkettige Liganden, wie z.B. Nonactin, Valinomycin in Verbindung mit Chronoionophoren, makrocyclische N-donor-Übergangsmetallkomplexe, wie beispielsweise Corrine, Phthalocyanine, Corrole, Porphyrinogene, Porphyrine, die mit Kobalt, Eisen, Vanadium, Molybdän und Ruthenium komplexiert sind. Derivate der Cobyrinsäure und Komplexe von Co(III) mit den oben genannten N-donor-Liganden sind insbesondere auf NOₓ sensitiv.

Bevorzugt führt diese Wechselwirkung zwischen dem zu bestimmenden Gas und der Indikatorsubstanz zu einer spektralen Änderung, d.h. zum Auftreten eines zumindest lokalen Absorptionsmaximums für elektromagnetische Strahlung. Die Lage des Absorptionsmaximums, d.h. die Wellenlänge bei dem dieses Absorptionsmaximums auftritt ist vorzugsweise für jedes Gas verschieden und kann im sichtbaren, infraroten oder einem anderen Bereich des elektromagnetischen Spektrums liegen, obwohl der sichtbare Bereich bevorzugt ist. Die Höhe des Absorptionsmaximums ist mit der Konzentration des wechselwirkenden Gases korreliert, so daß damit in einfachster Weise die Konzentration des Gases in der Gasmischung ermittelt werden kann. Die spektrale Lage des Absorptionsmaximums kann durch geeignete Wahl der Indikatorsubstanz bzw. deren Zusammensetzung über weite Bereiche hin gezielt eingestellt werden.

In einer weiteren bevorzugten Ausführung enthält die Sensormembran ein chemisch weitgehend inertes Polymer als Träger- und Schutzsubstanz, so daß sichergestellt ist, daß nur die Indikatorsubstanz mit dem Gas wechselwirkt, und nicht etwa, daß die Sensormembran, welche dieses inerte Polymer als Trägersubstanz enthält ebenfalls mit dem Gas reagiert und so die Meßergebnisse verfälschen würde. Darüberhinaus führt die Verwendung der spezifischen Polymermembran, beispielsweise PVC, Siloxane usw., zu einer verbesserten Extraktion und anschließender Löslichkeit des Gases durch bzw. in der Membran. Darüberhinaus werden die zumeist lipophilen Chromoionophore bzw. Liganden in den ebenfalls lipophilen Membranen besonders gut gelöst. In einer weiteren bevorzugten Ausführung enthält die Sensormembran ebenfalls einen Weichmacher, so daß die Membran elastisch bleibt, insbesondere für mechanische Beanspruchungen. In einer weiteren Ausführung enthält die Sensormembran einen gasspezifischen Katalysator, der es ermöglicht, daß das Gas zu der Indikatorsubstanz transportiert wird, und daß die Aktivierungsenthalpie der spezifischen Wechselwirkung zwischen gasförmiger Spezies und Indikatorsubstanz gesenkt wird. Weiterhin wird durch Verwendung eines gasspezifischen Katalysators die Selektivit verbessert.

Da die Indikatorsubstanz mit dem zu bestimmenden Gas physikalisch und/oder chemisch wechselwirkt, ist es in vorteilhafter Weise möglich, daß durch die Wechselwirkung eine Änderung der Absorptionseigenschaft der Indikatorsubstanz für elektromagnetische Strahlung erfolgt, wobei diese Änderung gasspezifisch erfolgt, so daß Querempfindlichkeiten bei der Messung ausgeschlossen werden können.

Insbesondere ist es vorteilhaft, wenn diese Änderung zu einem zumindest lokalen Absorptionsmaximum der Indikatorsubstanz für elektromagnetische Strahlung führt, welches in einfachster Weise detektiert werden kann.

Dazu ist es insbesondere von Vorteil, daß die Indikatorsubstanz einer elektromagnetischen Strahlung einer bestimmten Wellenlänge ausgesetzt ist, da jedes Gas eine gasspezifische Lage des Absorptionsmaximums aufweist.

In einer vorteilhaften Ausbildung wird bei Vorliegen des lokalen Absorptionsmaximums die Transmission der Indikatorsubstanz für elektromagnetische Strahlung gemessen, wobei die Transmission mit der Konzentration bzw. dem Partialdruck des zu bestimmenden Gases korreliert. Dadurch ist es mit einfachen Mitteln möglich, genau und ohne Querempfindlichkeiten Gase bis in den ppb-Bereich hinein zu bestimmen.

In einer weiteren bevorzugten Ausgestaltung ist mindestens ein Detektor für elektromagnetische Strahlung vorgesehen, der die Änderung der optischen Eigenschaften der Membran erfaßt. Der Detektor kann in vorteilhafter Weise eine Photodiode sein, die preiswert ist, klein und noch weiter miniaturisierbar, so daß insgesamt die Vorrichtung nur wenig Raum beansprucht und mit preiswerten Mitteln hergestellt werden kann.

In einer vorteilhaften Ausgestaltung ist die Membran zwischen der Quelle für elektromagnetische Strahlung und dem Detektor angeordnet so daß diese in einer Reihe sind, so daß der Detektor die Transmission besser erfassen kann.

Es ist möglich, die Membran auf einen für elektromagnetische Strahlung einer wählbaren Wellenlänge durchlässigen Träger zwischen der Quelle für elektromagnetische Strahlung und dem Detektor anzuordnen, es ist jedoch besonders vorteilhaft, die Membran direkt auf dem Detektor oder auf dem Sender anzuordnen, so daß eine weitgehende Einsparung für Trägeranordnungen möglich ist und eine weitere Miniaturisierung und Vereinfachung der Vorrichtung dadurch erreicht wird. Es ist ebenso vorteilhaft möglich, eine zumindest bereichsweise gasdurchlässige Schutzschicht, beispielsweise durch Silanisieren, zwischen Detektor/Sender und Membran vorzusehen.

Vorteilhafterweise wird diese Vorrichtung mit der Membran, dem Detektor und der Quelle für elektromagnetische Strahlung in einer Kammer angeordnet, die zumindest einen Einlaß und zumindest einen Auslaß für Gasmischungen aufweist, so daß Gase kontinuierlich gemessen werden können.

In einer bevorzugten Anwendung werden derartige Optoden zur Untersuchung von Abgasen von Verbrennungsmaschinen, insbesondere von Abgasen von Kraftfahrzeugen eingesetzt. Es ist ebenso in vorteilhafter Weise möglich, mit den erhaltenen Meßwerten eine Steuerung des Verbrennungsmotors durchzuführen. Dadurch ist es in einfacher Weise möglich, daß insbesondere beim Einsatz ammoniakempfindliche Sensoren zur der Überprüfung von Katalysatoren für Verbrennungsmotoren auf deren Verschleiß bzw. Alterungszustand zu schließen. Durch die Bestimmung von Sauerstoff O₂, CO, CO₂, HC und NOₓ in Abgasen von Verbrennungsmotoren kann auch der sogenannte Lambdawert in einfacher Weise ermittelt werden. In Verbindung mehrerer dieser Sensoren in einem Fahrzeug mit Verbrennungsmotor ist es möglich, ein sogenanntes abgasoptimiertes Motormanagement und permanente Fahrzeugüberwachung durchzuführen, und somit den Kraftstoffverbrauch zu optimieren und einen Verschleiß frühzeitig zu detektieren. Weiterhin ist es eine erfindungsgemäße Vorrichtung zur Überwachung der Luftgüte, wie sie beispielsweise zur Steuerung von Lüftungsklappen in KFZ mit Klimaanlagen durchgeführt wird, vorteilhaft einsetzbar. Ebenso können erfindungsgemäße Vorrichtungen zur Lüftungs- und Klimaregelung in Innenräumen gesteuert werden. Weiterhin können erfindungsgemäße Vorrichtungen zur Überwachung und Regelung von mit Kohlenwasserstoffen betriebenen Verbrennungs- und Feuerungsanlagen, oder beispielsweise zur Messung der NH₃-Konzentration in Kühlhäusern, für Kühlanlagen mit Ammoniak als Kühlmittel, oder für Rauchmelder eingesetzt werden. Durch die Bestimmung von Brandleitgasen durch einzelne und/oder eine Kombination dieser Sensoren kann die Detektionszeit von Rauchmeldern signifikant verkürzt und die Falschalarmsicherheit wesentlich erhöht werden.

### Zeichnung

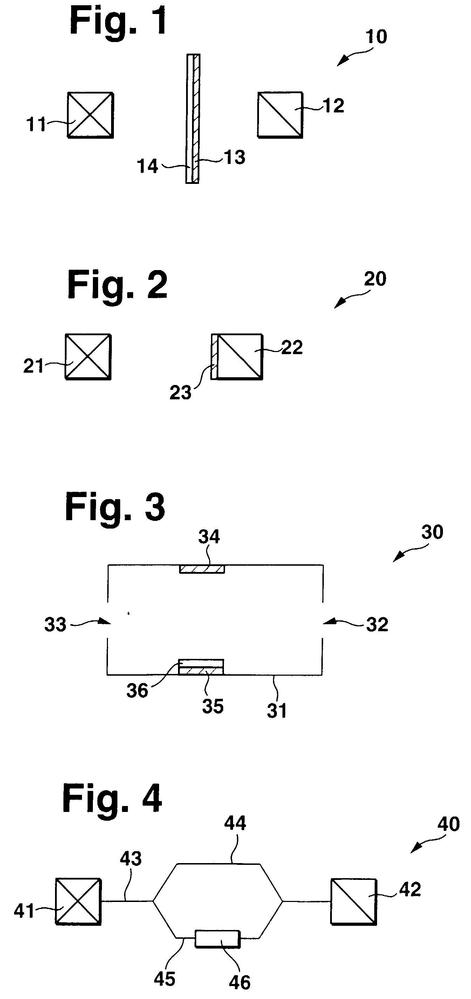

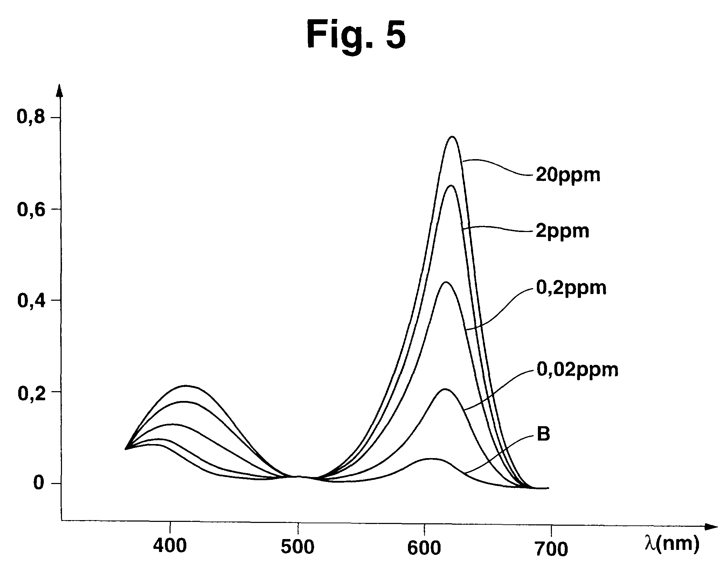

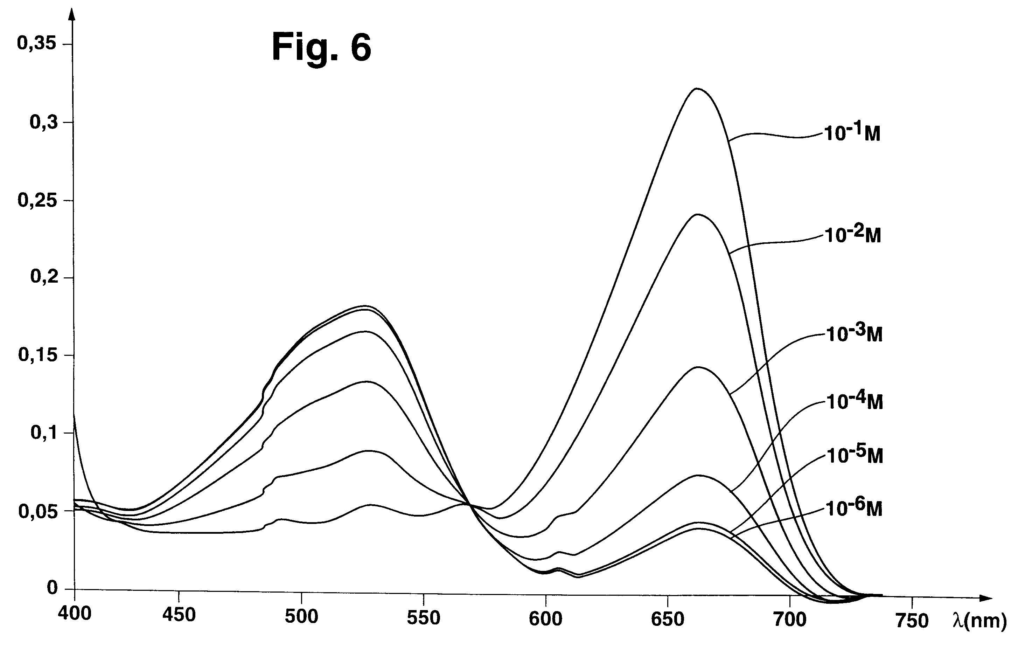

Die erfindungsgemäße Vorrichtung ist in den Zeichnungen dargestellt. Figur 1 zeigt eine erfindungsgemäße Anordnung zum Messen von Gasen, die Figuren 2 bis 4 zeigen weitere Ausführungsformen der erfindungsgemäßen Vorrichtung, Figur 5 ein Absorptionsspektrum einer erfindungsgemäßen Anordnung mit einer NH₃ sensitiven Membran und Figur 6 ein Absorptionsspektrum einer erfindungsgemäßen Anordnung mit einer NO sensitiven Membran, wobei in den Figuren 5 und 6 die Absizze die Absorption in relativen Einheiten und die Ordinate die Wellenlänge in nm angibt.

### Ausführungsbeispiele

Figur 1 zeigt den grundsätzlichen Aufbau einer erfindungsgemäßen Vorrichtung. Die Vorrichtung 10 weist eine Quelle 11 für elektromagnetische Strahlung auf, die beispielsweise eine LED mit einer bestimmten Wellenlänge ist. Der Quelle 11 gegenüber ist ein Detektor 12 für elektromagnetische Strahlung angeordnet, der beispielsweise eine Photodiode sein kann. Zwischen der Quelle 11 und dem Detektor 12, also im Strahlengang, ist ein für die Strahlung der Quelle 11 durchlässiger Träger 13 angeordnet. Er kann sich genau in der Mitte zwischen der Quelle 11 und dem Detektor 12 befinden, es ist jedoch ebenso im Rahmen der Erfindung möglich, ihn an jeder Position zwischen der Quelle 11 und dem Detektor 12 anzuordnen sofern er sich im Strahlengang befindet. Auf der der Quelle 11 zugewandten Seite des Trägers 13 ist eine erfindungsgemäße gasdurchlässige Sensormembran 14 aufgebracht. Die Quelle 11 strahlt nun in dauernden Impulsen, deren Dauer beliebig ist, obwohl es bevorzugt ist die Dauer des Impulses nicht zu lang zu wählen, elektromagnetische Strahlung einer Wellenlänge aus, die durch die Sensormembran 14 und den Träger 13 hindurch vom Detektor 12 erfaßt wird. Die Sensormembran enthält eine auf ein bestimmtes Gas sensitive Indikatorsubstanz und wurde mittels vorheriger Eichmessungen kalibriert. Sobald nun das zu bestimmende Gas in den Raum zwischen Quelle 11 und Detektor 12 eintritt, ändert die in der Sensormembran 14 enthaltene Indikatorsubstanz ihre Absorption für die Wellenlänge der auf sie auftreffenden elektromagnetischen Strahlung. Da diese Wellenlänge einem zumindest lokalen Absorptionsmaximum der Indikatorsubstanz entspricht, registriert der hinter Sensormembran 14 und Träger 13 angeordnete Detektor 12 eine veränderte Transmission. Die Höhe des Absorptionsmaximums und damit die Größe der Transmission sind proportional zu der Konzentration des Gases. Diese kann somit in einfacher Weise von einer nicht dargestellten Auswerteanordnung erfaßt werden. Bei einem Einsatz in beispielsweise Rauchmeldern o.ä. ist die Auswerteanordnung zusätzlich mit einem konzentrationskorrelierten Signalgeber verbunden.

Figur 2 zeigt eine weitere bevorzugte erfindungsgemäße Vorrichtung. Die Vorrichtung 20 ist gegenüber Figur 1 noch weiter vereinfacht und miniaturisiert. Dabei ist ebenfalls eine Quelle 21 für elektromagnetische Strahlung einer bestimmten wählbaren Wellenlänge, die ebenfalls in Impulsen wählbarer Zeitdauer ausgestrahlt wird angeordnet. In einem der Vorrichtung entsprechend wählbaren Abstand ist der Quelle 21 gegenüber im Strahlengang ein Detektor 22 für elektromagnetische Strahlung angeordnet, der auf der der Quelle 21 zugewandten Seite die gasdurchlässige Sensormembran 23 aufweist. Nicht dargestellt ist eine Auswerteanordnung und eine optionale Trennschicht, beispielsweise aus Polysiloxan, zwischen Sensormembran und Detektor.

Figur 3 zeigt noch eine Ausführungsform der erfindungsgemäßen Vorrichtung. Diese Vorrichtung 30 besteht aus einer Kammer 31, die eine Vorrichtung für den Gaseintritt 32 und eine Vorrichtung für den Gasaustritt 33 aufweist. Die genaue räumliche Anordnung dieser beiden Vorrichtungen ist im Rahmen der Erfindung unwesentlich. Wichtig ist nur, daß hinter dem Gaseintritt 32 eine Quelle 34 für elektromagnetische Strahlung einer diskreten wählbaren Wellenlänge angeordnet ist und dieser Quelle 34 genüber im Strahlengang ein Detektor 35 für elektromagnetische Strahlung, auf dem eine gasdurchlässige Sensormembran 36 angeordnet ist. Natürlich wäre es ebenso denkbar, die Sensormembran 36 auf einen für die gewählte elektromagnetische Strahlung durchlässigem Träger zwischen Quelle 34 und Detektor 35 anzuordnen. Der Detektor ist wiederum mit einer nicht dargestellten Auswerteanordnung und einer optionalen Trennschicht versehen. Die Auswerteanordnung kann beispielsweise mit einer weiteren Einrichtung, beispielsweise zur Steuerung von Maschinen und Motoren beliebiger Art versehen sein, deren optimales Funktionieren von einer definierten Gasatmosphäre oder einer bestimmten Konzentration eines Gases abhängt. Beispielsweise ist dies bei der Abgasuntersuchung von Kraftfahrzeugen notwendig. Die erfindungsgemäßen Vorrichtungen können aufgrund ihrer einfachen Miniaturisierbarkeit nicht nur in stationären Geräten zur Abgasuntersuchung eingesetzt werden, sondern auch zum Einbau in Kraftfahrzeuge. Es bietet sich beispielsweise eine ammoniaksensitiver Sensormembran in einer erfindungsgemäßen Vorrichtung zur Zustandsüberwachung von KFZ-Katalysatoren an. Meßsignale erfindungsgemäßer Vorrichtungen, die auf andere Gase sensitiv sind können zur Motorsteuerung herangezogen werden. Ein weiterer Einsatzbereich stellt die Überwachung der Luftgüte in Innenräumen dar, beispielsweise zur Steuerung von Klima- und Lüftungsanlagen.

Figur 4 zeigt eine weitere Ausführungsform der erfindungsgeämßen Vorrichtung. Die Vorrichtung 40 weist eine Quelle 41 für elektromagnetische Strahlung und einen Detektor 42, beispielsweise eine Photodiode auf. Quelle 41 und Detektor 42 sind mittels optischer Lichtwellenleiter 43 verbunden. Dieser weist einen Referenzarm 44 und einen Meßarm 45 auf. Der Meßarm 45 steht dabei in Kontakt mit der Sensormembran 46, die beispielsweise auf einen nicht dargestellten Träger oder dem Lichtwellenleiter selbst angeordnet ist.

Selbstverständlich sind die erläuterten Ausführungsbeispiele keine Beschränkung der Erfindung. So ist es insbesondere vorteilhaft, in einer erfindungsgemäßen Vorrichtung mehrere Sensormembranen mit unterschiedlichen Gasselektivitäten mit mehreren Quellen und Detektoren oder eine Quelle und ein Detektorarray elektromagnetischer Strahlung verschiedener Wellenlängen zu kombinieren, so daß mit einer einzigen Vorrichtung die Bestimmung mehrerer Gaskomponenten simultan möglich ist.

Ausführungsbeispiele für die erfindungsgemäße Sensormembran sind nachfolgend für verschiedene zu messende Gase aufgeführt:

### 1. NH₃ sensitive Sensormembran

Selektiver Ligand: ETH 157 (N,N'-dibenzyl-N,N'-diphenyl-1,2-(phenylendioxydiacetamid)), Indikator: TPBE (3',3'',5',5''-Tetrabromo-phenolphthalein-ethylester Kaliumsalz), Weichmacher: DOS (bis-(2-Ethylhexyl)-sebacat), Polymer: PVC.

115 mg ETH 157 werden mit 15,2 mg TPBE, 80mg DOS und 40mg PVC in 1,2 bis 2 ml THF gelöst. Diese Mischung wird auf eine Glasplatte bzw. einen anderen geeigneten Träger mittels an sich bekannter Verfahren aufgetragen. Das Lösungsmittel THF verdampft und zurück bleibt eine homogene, transparente Gelschicht, welche die aktiven Komponenten enthält. Die Gelschicht ist zwischen ein bis vier Mikrometern dick. Anstelle von ETH 157 kann in diesem Ausführungsbeispiels ebenfalls die gleiche molare Menge an Valinomycin verwendet werden.

Zur Eichung wurde eine so erhaltene 3 Mikrometer dicke Membran mit mehreren NH₃-Luft-Mischungen, die verschiedene NH₃- Konzentrationen aufwiesen in Kontakt gebracht und mit einer Lichtquelle über einen größeren Wellenlängenbereich bestrahlt, um die Lage des Absorptionsmaxiumums zu ermitteln. Das Ergebnis ist in Figur 5 gezeigt. Das Absorptionsmaximum liegt bei 620 nm. Die mit B markierte Kurve stellt das durch reine Luft verursachte Hintergrundssignal dar. Es ist aus Figur 5 klar ersichtlich, daß die Höhe des Absorptionsmaximums genau mit der NH₃-Konzentration korreliert ist. Die NH₃-Konzentration ist in ppm angegeben.

### 2. CO₂-sensitive Sensormembran

Es werden 2,07 mg ETH 4001 (N,N-dioctylaminophenyl-4'-trifluoroacetyl-azobenzol) und 0,44mg TDMACL (Tridodecylmethylammoniumchlorid) mit 80 mg reinem multifunktionellen Polysiloxan in THF gelöst und anschließend wie im ersten Beispiel auf eine Glasplatte oder einen anderen geeigneten Träger aufgetragen. Das THF verdampft und zurück bleibt eine homogene, transparente Gelschicht welche die nunmehr CO₂ aktiven Komponenten enthält. Die Dicke der Schicht beträgt zwischen 1 bis 5 Mikrometern.

### 3. NOₓ-sensitive Sensormembran.

Es werden 9,10mg Cyanaqua-cobyrinsäure-*heptakis*-(2-phenylethylester), 3,65mg ETH 5418 (11-[(1-Butylpentyl)oxy]-11-oxoundecyl-4-{[9-(dimethylamino)-5H-benzo[a]phenoxazin-5- yliden]-amino}-benzoat) mit 4,79 mg Kaliumtetrakis-[3,5-bis(trifluoromethyl)phenyl]-borat, 80mg DOS und PVC in THF gemischt und wie in den vorherigen Beispielen verarbeitet. Die Dicke der Schicht beträgt zwischen 1 bis 4 Mikrometer.

Zur Eichung wurde eine so erhaltene 3 Mikrometer dicke Membran mit mehreren NO-Luft-Mischungen, die verschiedene NO- Konzentrationen aufwiesen in Kontakt gebracht und mit einer Lichtquelle über einen größeren Wellenlängenbereich bestrahlt, um die Lage des lokalen Absorptionsmaxiumums zu ermitteln. Das Ergebnis ist in Figur 6 gezeigt. Das Absorptionsmaximum liegt bei 670 nm. Es ist aus Figur 6 klar ersichtlich, daß die Höhe des Absorptionsmaximums genau mit der NO-Konzentration korreliert ist. Die NO-Konzentration ist in molarer Konzentration angegeben.

Selbstverständlich stellen diese Ausführungsbeispiele keine Beschränkung der Erfindung dar. Es ist ebenso erfindungsgemäß möglich, jedes andere Gas bzw. jede andere sich im gasförmigen Zustand befindliche Verbindung, beispielsweise flüchtige Amine, Wasserdampf, Kohlenmonoxid, Wasserstoff, Sauerstoff oder Alkohole mit dem erfindungsgemäßen Verfahren zu bestimmen.

## Patentansprüche

1. Sensormembran einer Optode zur Bestimmung eines physikalischen und/oder chemischen Parameters einer Probe, die eine Indikatorsubstanz enthält, dadurch gekennzeichnet, daß die Indikatorsubstanz die Absorptionseigenschaften der Sensormembran für elektromagnetische Strahlung und/oder deren optischen Brechungsindex bei einem zumindest indirekten Kontakt mit einem Gas oder Gasgemisch ändert.

2. Sensormembran nach Anspruch 1, dadurch gekennzeichnet, daß, die Indikatorsubstanz gasspezifisch wirksam ist.

3. Sensormembran nach Anspruch 2,dadurch gekennzeichnet, daß die Indikatorsubstanz auf wenigstens zwei Gase anspricht.

4. Sensormembran nach Anspruch 1, dadurch gekennzeichnet, daß die Indikatorsubstanz als Ionenpaar vorliegt.

5. Sensormembran nach Anspruch 4, dadurch gekennzeichnet, daß das Ionenpaar aus einem kationischen oder anionischem Farbstoffmolekül und zumindest einem die elektrische Ladung des Farbstoffmoleküles kompensierenden Gegenion besteht.

6. Sensormembran nach Anspruch 1, dadurch gekennzeichnet, daß die Indikatorsubstanz eine Verbindung enthält, die mit dem zu bestimmenden Gas chemisch oder physikalisch reversibel wechselwirkt.

7. Sensormembran nach Anspruch 6, dadurch gekennzeichnet, daß die Verbindung ausgewählt ist aus der Gruppe der Azobenzole, Acetophenone, Corrine, Porphyrine, Phthalocyanine, Macrolide, Porphyrinogene, Nonactin, Valinomycin und/oder deren Komplexe mit Übergangsmetallen der I.-II. und der V.-VIII. Nebengruppe.

8. Sensormembran nach Anspruch 6, dadurch gekennzeichnet, daß die Wechselwirkung zu einem Auftreten eines zumindest lokalen Absorptionsmaximums für elektromagnetische Strahlung führt.

9. Sensormembran nach Anspruch 8, dadurch gekennzeichnet, daß die Lage des Absorptionsmaxiums für jedes Gas veschieden ist.

10. Sensormembran nach Anspruch 8 oder 9, dadurch gekennzeichnet, daß die Höhe des Absorptionsmaximums mit der Konzentration des wechselwirkenden Gases korreliert ist.

11. Sensormembran nach Anspruch 1, dadurch gekennzeichnet, daß die Sensormembran ein chemisch weitgehend inertes Polymer enthält.

12. Sensormembran nach Anspruch 1, dadurch gekennzeichnet, daß die Sensormembran einen Weichmacher enthält

13. Sensormembran nach Anspruch 1, dadurch gekennzeichnet, daß die Sensormembran einen gasspezifischen Katalysator enthält.

14. Sensormembran nach Anspruch 1, dadurch gekennzeichnet, daß die Sensormembran einen Phasentransferkatalysator enthält.

15. Verfahren zur Bestimmung von Gasen in Gasgemischen, dadurch gekennzeichnet, daß eine Änderung der Absorptionseigenschaften und/oder des optischen Brechungsindex einer zumindest indirekt dem Gasgemisch ausgesetzten Indikatorsubstanz gemessen wird.

16. Verfahren nach Anspruch 15, dadurch gekennzeichnet, daß die Indikatorsubstanz mit dem zu bestimmenden Gas physikalisch und/oder chemisch wechselwirkt.

17. Verfahren nach Anspruch 15 oder 16, dadurch gekennzeichnet, daß durch die Wechselwirkung eine Änderung der Absorptionseigenschaft der Indikatorsubstanz für elektromagnetische Strahlung erfolgt.

18. Verfahren nach Anspruch 17, dadurch gekennzeichnet, daß die Änderung gasspezifisch erfolgt.

19. Verfahren nach Anspruch 17 und 18, dadurch gekennzeichnet, daß die Änderung zu einem zumindest lokalen Absorptionsmaximum der Indikatorsubstanz für elektromagnetische Strahlung führt.

20. Verfahren nach Anspruch 15, dadurch gekennzeichnet, daß die Indikatorsubstanz einer elektromagnetischen Strahlung einer bestimmten Wellenlänge ausgesetzt ist.

21. Verfahren nach Anspruch 20, dadurch gekennzeichnet, daß die Wellenlänge einem lokalen Absorptionsmaximum der Indikatorsubstanz entspricht.

22. Verfahren nach Anspruch 21, dadurch gekennzeichnet, daß bei Vorliegen des lokalen Absorptionsmaximums die gemessene Transmission der Indikatorsubstanz für die elektromagnetische Strahlung gemessen wird.

23. Verfahren nach Anspruch 22, dadurch gekennzeichnet, daß die gemessene Transmission mit der Konzentration des zu bestimmenden Gases korreliert.

24. Vorrichtung zur Bestimmung von Gasen in Gasgemischen, dadurch gekennzeichnet, daß mindestens eine gasdurchlässige Membran vorgesehen ist, die bei einem zumindest indirekten Kontakt mit einem Gas oder Gasgemisch ihre Absorptionseigenschaften und/oder ihren optischen Brechungsindex ändert.

25. Vorrichtung nach Anspruch 24, dadurch gekennzeichnet, daß mindestens ein Detektor für elektromagnetische Strahlung, vorgesehen ist, der die Änderung der optischen Eigenschaften der Membran erfaßt.

26. Vorrichtung nach Anspruch 25, dadurch gekennzeichnet, daß der Detektor eine Photodiode ist.

27. Vorrichtung nach Anspruch 24, dadurch gekennzeichnet, daß mindestens eine Quelle für elektromagnetische Strahlung, insbesondere eine LED, einer diskreten wählbaren Wellenlänge vorgesehen ist.

28. Vorrichtung nach Anspruch 24 bis 27, dadurch gekennzeichnet, daß die Membran zwischen der Quelle für elektromagnetische Strahlung und dem Detektor angeordnet ist.

29. Vorrichtung nach Anspruch 28, dadurch gekennzeichnet, daß die Membran auf einem für elektromagnetische Strahlung einer wählbaren Wellenlänge durchlässigen Träger angeordnet ist.

30. Vorrichtung nach Anspruch 29, dadurch gekennzeichnet, daß die Membran auf dem Detektor und/oder der Quelle für elektromagnetische Strahlung angeordnet ist.

31. Vorrichtung nach einem der vorhergehenden Ansprüche, dadurch gekennzeichnet, daß die Membran, der Detektor und die Quelle für elektromagnetische Strahlung in einer Kammer angeordnet sind, die zumindest einen Einlaß und zumindest einen Auslaß für das Gasgemisch aufweist.

32. Vorrichtung nach einem der vorherigen Ansprüche, dadurch gekennzeichnet, daß der Detektor mit einer Auswerteanordnung versehen ist.

33. Vorrichtung nach einem der vorherigen Ansprüche, dadurch gekennzeichnet, daß die Sensormembran auf einem Interferometer, insbesondere auf einem Lichtwellenleiter, angeordnet ist.

34. Verwendung mindestens einer der Vorrichtungen nach Anspruch 24 bis 33 zur Untersuchung von Abgasen von Verbrennungsmaschinen, insbesondere von Abgasen von Kraftfahrzeugen.

35. Verwendung nach Anspruch 34, dadurch gekennzeichnet, daß mit den erhaltenen Meßwerten eine Steuerung der Verbrennungsanlage erfolgt.

36. Verwendung mindestens einer der Vorrichtungen nach Anspruch 24 bis 33 zur Überwachung der Luftgüte in Innenraümen.

37. Verwendung nach Anspruch 36, dadurch gekennzeichnet, daß mit den erhaltenen Meßwerten Vorrichtungen zur Lüftungs- und Klimaregelung in den Innenräumen geregelt werden.

38. Verwendung mindestens einer der Vorrichtungen nach Anspruch 24 bis 33 zur Überwachung und Regelung von mit Kohlenwasserstoffen betriebenen Verbrennungs- und Feuerungsanlagen.

39. Verwendung mindestens einer der Vorrichtungen nach Anspruch 24 bis 33 in Rauchmeldern.

40. Verwendung mindestens einer der Vorrichtungen nach Anspruch 24 bis 33 als Ammoniak-Melder, insbesondere in Kühlräumen mit Ammoniak enthaltenden Kühlvorrichtungen.
